# EUROPÄISCHE PATENTANMELDUNG

(11) **EP 0 775 598 A2**
(43) Veröffentlichungstag der Anmeldung: **28.05.1997**
(21) Anmeldenummer: 96113713.0
(22) Anmeldetag: 28.08.1996
(51) Int. Cl.: B60B 33/00

(54) **Lenkrolle für Transportgeräte, wie Einkaufswagen od. dgl.**

(30) Priorität: 24.11.1995 DE 29518629 U
(71) Anmelder: Rhombus Rollen GmbH & Co., 42929 Wermelskirchen (DE)
(72) Erfinder: Nusselein, Manfred, Dipl.-Ing. Dr., 40723 Hilden (DE)

(57) **Zusammenfassung**

Die mit Lenkrollen ausgestatteten Transportgeräte sind mit einem eine längsgerillte Oberfläche aufweisenden, geneigt verlaufenden Transportband (31) beförderbar, wobei auf einer in einem schwenkbaren Radtragkörper (10) gehalterten Achse (18) zwei unabhängig voneinander drehbare Laufräder (19) gelagert sind, deren Radscheiben (26) von einerseits Aufstandsflächen bildenden und andererseits in die Rillen (32) des Transportbandes (31) eindringenden Laufringen (29) umfaßt sind, wobei am Radtragkörper (10) eine einen Bremsfuß (23) aufweisende Bremsstütze (20) derart angeordnet ist, daß ihr Bremsfuß (23) in einem solchen Abstand zur Aufstandsfläche der Laufringe (29) angeordnet ist, daß bei auf dem Transportband aufsitzendem Bremsfuß (23) die Laufringe (29) bereichsweise in die Rillen (32) des Transportbandes (31) unbelastet eindringen.

Zur uneingeschränkten Aufrechterhaltung des Differentialeffektes bei vergrößerter Aufstandsfläche der Laufringe einerseits und zur Verminderung der Bruchgefahr am Rand der Laufringe andererseits weist jeder Laufring (29) einer jeden Radscheibe (26) wenigstens zwei im Abstand der Rillen (32) (31) angeordneten Spurkränze (30) auf und die Radscheiben (26) in einem solchen Abstand zueinander angeordnet ist, daß der Mittenabstand ihrer benachbarten Spurkränze (30) dem einfachen oder ganzzahligen Vielfachen des Mittenabstandes der Rillen (32) des Transportbandes entspricht.

## Beschreibung

Die Erfindung betrifft eine Lenkrolle für Transportgeräte, wie Einkaufswagen od. dgl., die auf einem eine längsgerillte Oberfläche aufweisenden, geneigt verlaufenden Transportband beförderbar sind, wobei auf einer in einem schwenkbaren Radtragkörper gehalterten Achse zwei unabhängig voneinander drehbare Laufräder nebeneinander gelagert sind, deren Radscheiben von einerseits Aufstandsflächen bildenden und andererseits in die Rollen des Transportbandes eindringenden Laufringen umfaßt sind, wobei am Radtragkörper eine einen Bremsfuß aufweisende Bremsstütze derart angeordnet ist, daß ihr Bremsfuß in einem solchen Abstand zur Aufstandsfläche der Laufringe angeordnet ist, daß bei auf dem Transportband aufsitzendem Bremsfuß die Laufringe bereichsweise in die Rillen des Transportbandes unbelastet eindringen.

Bei einer aus der DE 26 56 322 bekannten Lenkrolle sind auf einer gemeinsamen Achse zwei unabhängig voneinander drehbare Laufräder gelagert, deren Radscheiben an ihrem Außenumfang derart verjüngt sind, daß sie in die Rillen eines Transportbandes eingreifen können. Der die Achse halternde Radtragkörper ist zwischen die Laufräder eingezogen und bildet mit einer nach unten ragenden Verlängerung des Radtragkörpers eine Bremsstütze, deren unteres Ende einen Bremsfuß trägt. Die Radscheiben werden durch die sie gemeinsam durchdringende Achse auf axialem Abstand gehalten, während die Randzonen der als tellerartige Scheiben ausgebildeten Laufräder frei sind. Spiel und Verschleiß an der Lagerstelle der Laufräder kann dazu führen, daß sich der Abstand der spurkranzartigen Ränder der Laufräder voneinander verändert, so daß das Eintauchen dieser Umfangszonen der Laufräder in die Rillen des Transportbandes problematisch wird. Außerdem ist die einzige relativ dünne Randzone der Laufräder bei Verschwenkung der Lenkrolle insofern gefährdet, als daß diese Randzone leicht ausbrechen kann. Ferner ist bei starker Belastung der Lenkrolle eine Aufwartung der Randzonen der Laufräder möglich, wodurch sich eine Abstandsveränderung der Laufräder an ihren Randzonen ergibt.

Die DE 29 10 555 B2 offenbart eine Lenkrolle, deren Laufrad ebenfalls aus zwei unabhängig voneinander drehbaren Radscheiben gebildet ist, die in einem gabelartigen Radtragkörper untergebracht sind. Jede dieser beiden Radscheiben weist an ihrem Außenumfang einen Laufring auf, mit dem jede Radscheibe in die Längsrillen eines Transportbandes eindringen kann. Allerdings sind die beiden Radscheiben an ihrem Außenumfangsbereich mit ineinandergreifenden Nuten und Vorsprüngen versehen, wodurch ein geschlossener Radkörper gebildet wird, bei dem sich die beiden Radscheiben gegeneinander abstützen. Diese Maßnahme verhindert zwar eine Aufweitung der Radscheiben und damit eine Veränderung des Abstandes der Laufringe voneinander, schränkt jedoch den Differenztialeffekt der beiden Radscheiben bei einer Schwenkbewegung der Lenkrolle infolge der im Verbindungsbereich auftretenden Reibung ein.

Die Aufgabe der Erfindung besteht darin, eine Lenkrolle der eingangs genannten Art dahingehend zu verbessern, daß der Differenztialeffekt beider Radscheiben des Laufrades einer Lenkrolle ohne Einschränkung aufrechterhalten bleibt, die Aufstandsfläche der Laufringe vergrößert wird und deren Bruchgefahr am Rand vermindert ist. Diese Aufgabe ist erfindungsgemäß dadurch gelöst, daß jeder Laufring einer jeden Radscheibe wenigstens zwei im Abstand der Rillen des Transportbandes angeordnete Spurkränze aufweist und die Radscheiben in einem solchen Abstand zueinander angeordnet sind, daß der Mittenabstand ihrer benachbarten Spurkränze dem einfachen oder ganzzahligen Vielfachen des Mittenabstandes der Rillen des Transportbandes entspricht. Bei einer derartigen Lenkrolle kann sich bei deren Schwenkbewegung und Kurvenfahrt der Differenztialeffekt zwischen den beiden Radscheiben einer jeden Lenkrolle uneingeschränkt einstellen, so daß kein erhöhter Verschleiß an der Aufstandsfläche der Laufringe auftritt. Außerdem ist durch die Mehrfachanordnung von Spurkränzen an einer Radscheibe die Gefahr des Ausbrechens von Randzonen der Spurkränze gemindert.

Zur Anordnung wenigstens zweier Spurkränze am Laufring einer Radscheibe weist diese vorteilhaft einen äußeren Umfangswulst auf, dessen Breite mit der Breite des die Spurkränze aufweisenden Laufringes übereinstimmt. Dabei ist es zweckmäßig die Radscheibe und den Laufring aus unterschiedlichen Werkstoffen zu fertigen um diese auf die unterschiedlichen Beanspruchungen und Erfordernisse abstimmen zu können. Dabei kann es sich um Kunststoffe unterschiedlicher Konsistenz und Festigkeit handeln, wobei die Laufringe beispielsweise durch Umspritzen des Umfangswulstes der Radscheibe gebildet sein können. Zur Erzielung eines festen Verbundes zwischen Umfangswulst der Radscheibe und dem Laufring weist die Umfangsfläche des Umfangswulstes jeder Radscheibe vorteilhaft eine umlaufende Schwalbenschwanznut zur Verankerung des Laufringes an der Radscheibe auf. Darüber hinaus mögen die Umfangswulste der Radscheiben vorteilhaft sich in Umfangsrichtung erstreckende Hohlräume aufweisen, die über radiale Durchbrüche in die Umfangsflächen der Umfangswulste zur Schaffung eines Formschlußverbundes zwischen Radscheibe und Laufring münden.

Grundsätzlich ist es möglich, die Radscheiben entweder über Wälzlager oder aber über Gleitlager auf der Achse anzuordnen. Dabei mag es im Falle der Verwendung einer Gleitlagerung zur Vermeidung von Verschmutzungen im Lagerbereich vorteilhaft sein, wenn jede Radscheibe auf einer ihr zugeordneten, auf der Achse abgestützten Buchse gelagert ist, die an ihrer Außenseite eine die Radscheibe bereichsweise abdeckende Tellerscheibe trägt.

Die Erfindung ist anhand eines Ausführungsbeispieles auf der Zeichnung dargestellt und wird nachfolgend beschrieben. Es zeigen:

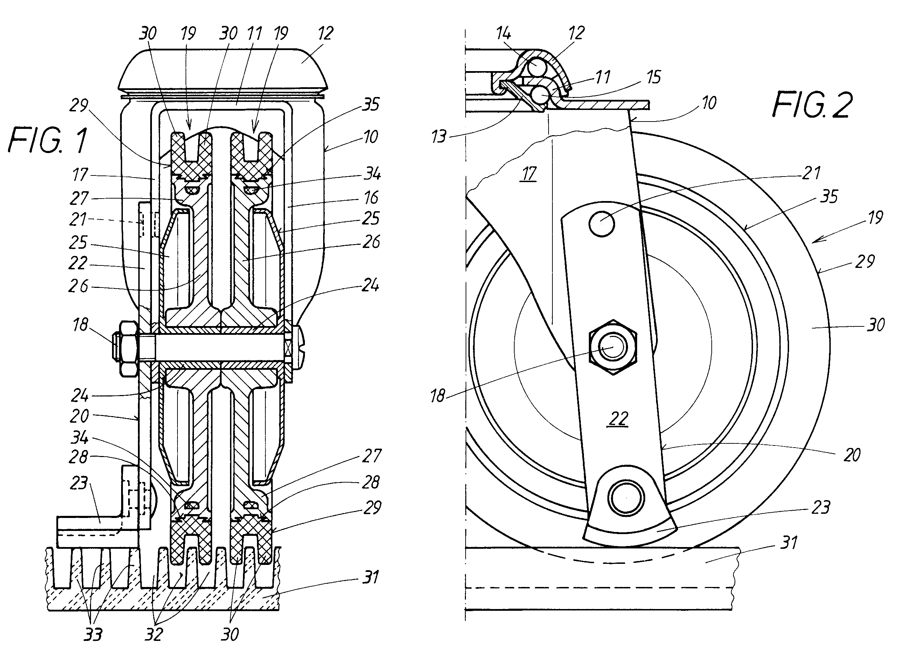

- Fig. 1: ein Ausführungsbeispiel einer neuerungsgemäßen Lenkrolle in einem Vertikalschnitt,
- Fig 2: die aus Fig. 1 ersichtliche Lenkrolle in einer teilweisen Seitenansicht.

Der gabelförmige Radtragkörper 10 greift mit einem an diesem verkröpft angeformten Gabelrücken 11 zwischen eine obere Lagerschale 12 und eine untere Lagerschale 13. Zwischen dem Gabelrücken 11 und den miteinander verbundenen Lagerschalen 12 und 13 ist jeweils ein Kugelkranz 14 und 15 angeordnet, durch die der Radtragkörper 10 gegenüber den Lagerschalen 12 und 13 schwenkbar gehaltert ist. Die Gabelschenkel 16 und 17 sind von einem Achsbolzen 18 durchquert, der einerseits die zwischen den Gabelschenkeln 16 und 17 angeordneten Laufräder 19 lagert und andererseits zusammen mit einem an der Bremsstütze 20 angeformten Zapfen 21 die Stützlasche 22 der Bremsstütze 20 bei dem dargestellten Ausführungsbeispiel an dem Gabelschenkel 17 festlegt. An seinem Unterende trägt der Stützschenkel 22 einen Bremsfuß 23, der zusammen mit dem vorgenannten Stützschenkel die Bremsstütze 20 bildet.

Der Achsbolzen 18 ist in seinem zwischen den Gabelschenkeln 16 und 17 liegenden Bereich von zwei Buchsen 24 umfaßt, die jeweils die halbe Länge des Abstandes zwischen den Gabelschenkeln 16 und 17 aufweisen und an ihrer jeweiligen Außenseite eine Tellerscheibe 25 tragen. Jede Buchse 24 nimmt ein Laufrad 19 auf, in dem sich die Radscheibe 26 eines jeden Laufrades 19 mit einer Nabe auf der jeweiligen Buchse 24 drehbar abstützt. Jede Radscheibe 26 weist einen äußeren Umfangswulst 27 auf, der an seinem Außenumfang mit einer Schwalbenschwanznut 28 versehen ist. Der Außenumfang jeder Umfangswulst 27 einer Radscheibe 26 ist von einem Laufring 29 umfaßt, der mit der Radscheibe 26 fest verbunden ist, was beispielsweise bei der Verwendung von Kunststoff durch Umspritzen erfolgen kann. Jeder Laufring 29 weist bei dem dargestellten Ausführungsbeispiel zwei mit Abstand zueinander angeordnete und sich in radialer Richtung erstreckende Spurkränze 30 auf. Der Abstand der Spurkränze 30 voneinander entspricht dem Abstand zweier benachbarter Rillen 32 bzw. dem Abstand zweier benachbarter Rippen 33 des Transportbandes 31.

Zur Schaffung eines sicheren Verbundes zwischen dem Laufring 29 und dem Wulst 27 der Radscheibe 26 weisen die Umfangswulste Hohlräume 34 auf, die sich in Umfangsrichtung der Umfangswulste 27 erstrecken und über nicht dargestellte radiale Durchbrüche in die Umfangsfläche 35 der Umfangswulste 27 ausmünden. Dadurch läßt sich ein inniger Verbund zwischen jedem Laufring 29 und jedem Umfangswulst 27 der Radscheibe 26 erzielen.

Solange nun der mit den neuerungsgemäßen Lenkrollen bestückte Einkaufswagen auf einer ebenen Fläche aufsteht, ist ein kleiner Bereich des Außenumfanges jeden Spurkranzes 30 in Berührung mit der Aufstandsfläche, so daß die Verfahrbarkeit des Einkaufswagens gegeben ist. Wenn nun der Einkaufswagen auf ein Transportband 31 mit sich in dessen Längsrichtung erstreckenden Rippen 33 und dazwischen liegenden Rillen 32 geschoben wird, so dringen die Spurkränze 30 in die Rillen 32 des Transportbandes 31 soweit ein, bis der Bremsfuß 23 auf der Oberseite der Rippen 33 aufsteht. Dabei versteht es sich, daß der Abstand zwischen dem Außenumfang der Spurkränze 30 und der Aufstandsfläche des Bremsfußes 23 wesentlich geringer als die Höhe der Rippen 33 des Transportbandes 31 ist. Die auf den Rippen 33 des Transportbandes 31 mit ihren Bremsfüßen 23 aufstehenden Bremsstützen 20 bewirken, daß selbst bei geneigtem Transportband der Einkaufswagen in bezug auf das sich bewegende Transportband ortsfest verbleibt.

Wie bereits erwähnt geben die Zeichnungen den Gegenstand der Erfindung nur beispielsweise wieder, die keinesfalls allein darauf beschränkt ist. Es sind vielmehr noch weitere Ausgestaltungen und Ausbildungen des Erfindungsgegenstandes denkbar.

### Bezugszeichenliste:

- 10: Radtragkörper
- 11: Gabelrücken
- 12: Lagerschale, obere
- 13: Lagerschale, untere
- 14: Kugelkranz
- 15: Kugelkranz
- 16: Gabelschenkel
- 17: Gabelschenkel
- 18: Achsbolzen
- 19: Laufrad
- 20: Bremsstütze
- 21: Zapfen
- 22: Stützlasche
- 23: Bremsfuß
- 24: Buchse
- 25: Tellerscheibe
- 26: Radscheibe, von 19
- 27: Umfangswulst
- 28: Schwalbenschwanznut
- 29: Laufring
- 30: Spurkranz
- 31: Transportband
- 32: Rille
- 33: Rippe
- 34: Hohlraum
- 35: Umfangsfläche

## Patentansprüche

1. Lenkrolle für Transportgeräte, wie Einkaufswagen od. dgl., die mit einem eine längsgerillte Oberfläche aufweisenden, geneigt verlaufenden Transportband (31) beförderbar sind, wobei auf einer in einem schwenkbaren Radtragkörper (10) gehalterten Achse (18) zwei unabhängig voneinander drehbare Laufräder (19) gelagert sind, deren Radscheiben (26) von einerseits Aufstandsflächen bildenden und andererseits in die Rillen (32) des Transportbandes (31) eindringenden Laufring (29) umfaßt sind, wobei am Radtragkörper (10) eine einen Bremsfuß (23) aufweisende Bremsstütze (20) derart angeordnet ist, daß ihr Bremsfuß (23) in einem solchen Abstand zur Aufstandsfläche der Laufringe (29) angeordnet ist, daß bei auf dem Transportband (31) aufsitzendem Bremsfuß (23) die Laufringe (29) bereichsweise in die Rillen (32) des Transportbandes (31) unbelastet eindringen,
**dadurch gekennzeichnet,**
daß jeder Laufring (29) einer jeden Radscheibe (26) wenigstens zwei im Abstand der Rillen (32) des Transportbandes (31) angeordnete Spurkränze (30) aufweist und die Radscheiben (26) in einem solchen Abstand zueinander angeordnet sind, daß der Mittenabstand ihrer benachbarten Spurkränze (30) dem einfachen oder ganzzahligen Vielfachen des Mittenabstandes der Rillen (32) des Transportbandes entspricht.

2. Lenkrolle nach Anspruch 1, dadurch gekennzeichnet, daß jede Radscheibe (26) einen äußeren Umfangswulst (27) aufweist, dessen Breite mit der Breite des die Spurkränze (30) aufweisenden Laufringes (29) übereinstimmt.

3. Lenkrolle nach Anspruch 1 oder 2, dadurch gekennzeichnet, daß die Umfangsfläche (35) des Umfangswulstes (27) jeder Radscheibe (26) eine umlaufende Schwalbenschwanznut (28) zur Verankerung des Laufringes (29) an der Radscheibe (26) aufweist.

4. Lenkrolle nach einem der vorhergehenden Ansprüche, dadurch gekennzeichnet, daß die Umfangswulste (27) der Radscheiben (26) sich in Umfangsrichtung erstreckende Hohlräume (34) aufweisen, die über radiale Durchbrüche in die Umfangsflächen (35) der Umfangswulste (27) zur Schaffung eines Formschlußverbundes zwischen Radscheibe (26) und Laufring (29) münden.

5. Lenkrolle nach einem der vorhergehenden Ansprüche, dadurch gekennzeichnet, daß jede Radscheibe (26) auf einer ihr zugeordneten, auf der Achse (18) abgestützten Buchse (24) gelagert ist, die an ihrer Außenseite eine die Radscheibe (26) bereichsweise abdeckende Tellerscheibe (25) trägt.
